# NEUE EUROPÄISCHE PATENTSCHRIFT

(11) **EP 1 611 412 B2**
(45) Veröffentlichungstag und Bekanntmachung des Hinweises auf die Entscheidung über den Einspruch: **24.08.2016**
(45) Hinweis auf die Patenterteilung: 14.06.2006
(21) Anmeldenummer: 04732321.7
(22) Anmeldetag: 12.05.2004
(51) Int. Cl.: G01B 5/00, G01N 23/00

(54) **MANIPULATOR FÜR EINE PRÜFVORRICHTUNG FÜR ZERSTÖRUNGSFREIE MATERIALPRÜFUNG**
MANIPULATOR FOR A DEVICE USED FOR NON-DESTRUCTIVE MATERIAL TESTING
MANIPULATEUR POUR DISPOSITIF D'ESSAI DE MATIERE NON DESTRUCTIF

(30) Priorität: 16.05.2003 DE 10322281
(43) Veröffentlichungstag der Anmeldung: 04.01.2006
(73) Patentinhaber: GE Sensing & Inspection Technologies GmbH, 50354 Hürth (DE)
(72) Erfinder: WÜSTENBECKER, Michael, 22952 Lütjensee (DE)
(74) Vertreter: Vorberg, Jens
(86) Internationale Anmeldenummer: PCT/EP2004/005171
(87) Internationale Veröffentlichungsnummer: WO 2004/102110

(56) Entgegenhaltungen:
- WO-A1-96/11633
- DE-A- 10 139 645
- DE-A1- 8 800 428
- GB-A- 711 887
- US-A- 5 048 071
- US-A- 5 050 204
- US-B1- 6 244 745

## Beschreibung

Die Erfindung betrifft eine Prüfvorrichtung für zerstörungsfreie Materialprüfung nach dem Oberbegriff von Anspruch 1.

Bei einer Röntgenprüfvorrichtung ist der an einem Halter angebrachte, beispielsweise C-förmige Träger üblicherweise um mehrere Achsen verstellbar, um die Position der Röntgenvorrichtung relativ zum Prüfobjekt verstellen zu können. Die Erfindung betrifft insbesondere eine zweiachsige Prüfvorrichtung.

Es ist eine Prüfvorrichtung mit einem C-förmigen Träger bekannt, an dem eine Röntgenröhre und ein Detektor gegenüberliegend angeordnet sind. DerTräger ist an einem linearen Halter befestigt und entlang diesem linearverfahrbar. Der Träger ist relativ zum Halter mittels eines Schwenkantriebs um eine zu der Längsachse des dem Halters senkrechte Schwenkachse schwenkbar. Dementsprechend ist eine zwelachsige Aufhängung des Trägers mit einem Linearantrieb und einem Schwenkan-trieb vorgesehen. Der Halter muß dabei zusätzlich das Gewicht des Schwenkantriebs und die von dem Schwenkantrieb ausgeübten Drehmomente aufnehmen. Der Schwenkantrieb stellt eine relativ große bewegte Masse dar. Der Trägerübt ein nachteiliges Drehmoment auf das Schwenklager aus. Um eine hinreichende Stabilität zu erreichen, ist daher insgesamt ein aufwendiger Aufbau erforderlich. Unter Umständen kann ein Gegengewicht bzw. eine Hubunterstützung fürden Träger erforderlich sein. Femer kann ein umständlicher Kabelschlepp zur Versorgung des Schwenkantriebs erforderlich sein.
WO 96 11633 A1 offenbart einen Röntgenprüfapparat mit einem Manipulator, der zwei vertikale Linearachsen aufweist, und mit einem vertikal verfahrbaren, längenunveränderlichen Träger (coupling device), an dem zwei Prüfvorrichtungen mit je einer Röntgenquelle und einem Röntgendetektor befestigt sind. Der Träger ist über eine mechanische Welle um eine Rotationsachse schwenkbar und mit einem drehbaren Antriebsmittel (drive means) verbunden. Weiterhin sind zwei entlang der Linearachsen synchron verschiebbare Hülsenteile (retainer device parts) und entsprechende, gegebenenfalls motorgetriebene Verschiebeteile (displacement parts) zum Verschieben der Hülsenteile entlang der Linearachsen vorgesehen. In einer Ausführungsform sind die Hülsenteile voneinander lösbar, um eine individuelle Verschiebung zu ermöglichen. Durch eine Relativbewegung zwischen den Hülsenteilen kann das Antriebsmittel und dadurch der Träger rotiert werden.

US 6 244 745 B1 betrifft eine Vorrichtung zum Schwenken eines Röntgentisches mit einem Tischhalter, der durch unabhängiges Verfahren entlang zweier Gewindestangen schwenkbar ist. Der Tischhalter ist zur Aufnahme eines Röntgen-Bildverstärkers eingerichtet. Eine nicht gezeigte Röntgenröhre ist oberhalb des Tischhalters angeordnet.

US 5 048 071 betrifft eine Vorrichtung zum Schwenken eines Rontgentisches mit einem Tischhaller, der durch unabhängiges Verfahren entlang zweier Gewindestangen schwenkbar ist.

GB 711 887 betrifft einen mittels einer Gewindestange höhenverstelbaren Halter für eine Röntgenröhre. Die Röntgenröhre ist mittels einer Gewindestange schwenkbar.

Die Aufgabe der Erfindung besteht darin, eine Prüfvorrichtung bereitzustellen, die einen einfachen Aufbau und hohe Stabilität sowie vorzugsweise reduzierte Abmessungen aufweist

Die Erfindung löst diese Aufgabe insbesondere dadurch, daß der Manipulator zwei Linearachsen aufweist, an denen der Träger in einemAbstand jeweils angelenkt und in der Längsrichtung unabhängig verfahrbar ist. Die Längsrichtung bezeichnet dabei die Lengsrichtung der entsprechenden Linearachse. Bei gleichsinnigem Verfahren des Trägers entlang der beiden linearen Achsen wird eine Parallelverschiebung des Trägers in der Längsrichtung des Manipulators bewirkt. Bei einem Verfahren des Trägers entlang lediglich einer Linearachse, oder gegensinnigem Verfahren des Trägers entlang beider linearer Achsen, wird ein Schwenken des Trägers bewirkt. Aufgrund des Abstands der Anlenkungen des Trägers Jeweils an den Linearachsen ergibt sich ein stabiler Aufbau. Durch den Entfall des Schwenkantriebs werden die bewegte Masse und die entsprechenden Drehmomente reduziert und eine Platzerspamis erreicht. Da sich die bewegte Masse auf zwei lineare Antriebe verteilt, werden diese entlastet, so daß einGegengewicht bzw. eine Hubunterstützung entbehrlich ist. Durch Verwendung zweier gleicher Linearantriebsachsen können die Herstellungskosten gesenkt werden.

Zweckmäßigerweise ist zum Verfahren des Trägers jeweils ein entlang der Linearachsen verfahrbares Führungselementvorgesehen. Ein einfaches und daher bevorzugtes Führungselement ist ein entlang der Linearachse verschiebbarer Schlitten. Es sind aber ach andere Ausführungsformen denkbar, beispielsweise die Ausführung der Linearachsen als Teleskopachsen.

Bevorzugt ist die Anwendung der Erfindung auf Röntgenvonichtungen mit einer Röntgenquelle und einem Röntgendetektor. Die Erfindung ist jedoch ebenfalls anwendbar auf Materialprüfung mittels anderen Strahlungs- oder Schallquellen, beispielsweise Ultraschall, Laser, Infrarotstrahlung oder Wirbeiströmen. Die Erfindung betrifft vorzugsweise eine gegenüberliegende Anordnung einer Prüfquelle bzw. eines Prüfkopfs und eines Detektors, die zweckmäßigerweise an den Seitenschenkein eines C-förmigen Trägers angeordnet sein können. Die Erfindung ist aber auch auf andere Prüfgeometrien anwendbar, beispielsweise wenn die Prüfquelle gleichzeitig als Detektor verwendet wird oder Prüfquelle und Detektor in einer Reflexionsgeometrie angeordnet sind. In diesem Fall kann der Träger beispielsweise L-förmig sein, wobei Prüfquelle und Detektor an einem Schenkel des Trägers angeordnet sein können.

Um die Abstandsänderung zwischen den beiden Anlenkungen des Trägers an den Linearachsen auszugleichen, ist ein Längenausgleichselement zwischen dem Träger und einer Linearachse vorgesehen. Ein einfaches und daher bevorzugtes Längenausgleichselement ist ein verschiebbarer Zwischenschlitten. Die Verschiebungsrichtung des Zwischenschlittens weist dabei zweckmäßigerweise eine zu dem Träger parallele Richtungskomponente auf. Der Zwischenschlitten kann gegebenenfalls mit dem entsprechenden Führungselement einen Kreuzschlitten bilden. Der Abstandsausgleich kann jedoch auch anders erreicht werden. Eine weitere Möglichkeit besteht in der Verwendung eines an dem Träger angelenkten und entlang einer Linearachse verschiebbar angelenkten Längenausgleichselements, beispielsweise einer Schubstange.

Vorzugsweise sind die Linearachsen im wesentlichen parallel zueinander ausgerichtet, um eine besonders einfache Geometrie zu erreichen. Hierdurch wird die Steuerung insbesondere der linearen Parallelverschiebung des Trägers entlang dar Linearachsen vereinfacht. Weiterhin sind die Linearachsen aus Stabilltätsgründen vorzugsweise im wesentlichen starr zueinander angeordnet.

Weitere vorteilhafte Merkmale gehen aus den Unteransprüchen und der folgenden Beschreibung vorteilhafter Ausführungsbeispiele unter Bezugnahme auf die beigefügten Zeichnungen hervor. Es zeigen:

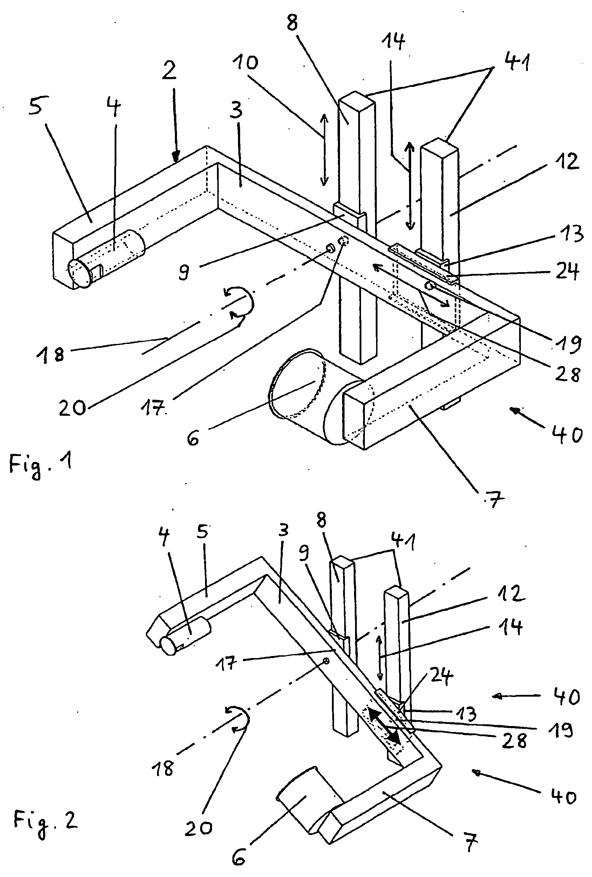

- Fig. 1:: eine perspektivische Ansicht eines Röntgenapparats mit horizontaler Ausrichtung des Trägers;
- Fig. 2:: eine perspektivischen Ansicht eines Röntgenapparats mit einer geschwenkten Ausrichtung des Trägers;
- Fig. 3:: eine Ansicht eines Röntgenapparats senk- 25 recht zu den Linearachsen zur Verdeutlichung einer linearen Parallelverschiebung des Trägers;
- Fig. 4:: eine Ansicht eines Röntgenapparats senkrecht zu den Linearachsen zur Verdeutlichung einer Schwenkung des Trägers; und
- Fig. 5: eine Ansicht eines Röntgenapparats parallel zu den Linearachsen.

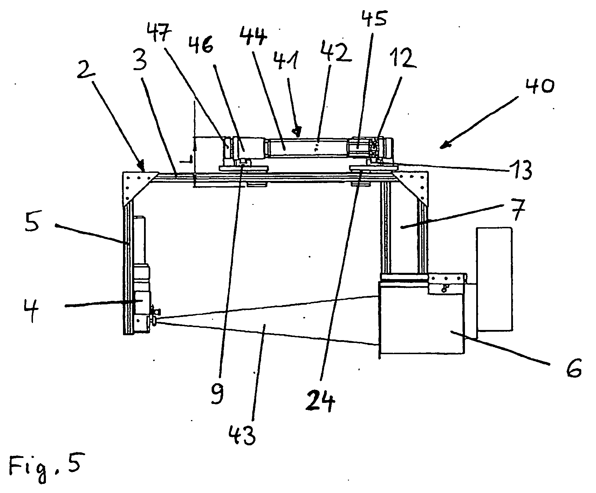

Ein Röntgenapparat weist einen Träger 2 auf, der an einem Halter 41 befestigt ist. An dem Träger 2 sind eine Röntgenröhre 4 und ein Röntgendetektor 6 einander gegenüberliegend angebracht. Halter 41 und Träger 2 bilden einen Manipulator 40. der zum Positionieren der Röntgenröhre 4 und des Röntgendetektors 6 dient. Der Träger 2 ist zweckmäßigerweise C-förmig bzw. U-förmig und weist im vorliegenden Ausführungsbeispiel einen Basisschenkel 3 und zwei Seitenschenkel 5, 7 auf An dem Seitenschenkel 5 ist die Röntgenröhre 4, an dem Seitenschenkel 7 der Röntgendetektor 6 angebracht. Aus der Röntgenröhre 4 austretende Röntgenstrahlung 43 durchtritt ein in einem Prüfraum zwischen Röntgenröhre 4 und Röntgendetektor 6 angeordnetes Prüfobjekt und wird mittels des Röntgendetektors 6 aufgezeichnet und zu einer nicht gezeigten Auswerteeinrichtung geleitet. Aus Stabilitätsgründen umfaßt der Haller 41 vorzugsweise ein Stützelement 42 zwischen den Linearachsen 8, 12 (siehe Fig. 5).

Der Halter 41 umfaßt zwei Linearachsen 8, 12, die im vorliegenden Beispiel etwa vertikal angeordnet sind, was jedoch nicht zwingend der Fall sein muß. An den Linearachsen 8, 12 ist jeweils ein Schlitten 9, angebracht. Jeder Schlitten 9, 13 ist in Längsrichtung 10 bzw. 14, d.h. entlang der Linearachsen 8, 12 unabhängig verfahrbar. Zum unabhängigen Verfahren der Schlitten 9, 13 ist jeweils ein Linearantrieb 42, 44 an den Linearachsen 8, 12 vorgesehen (siehe Fig. 5). Die Linearantriebe sind an einem Stützelement 45 zwischen den Linearachsen 8, 12 angeordnet, wobei im Beispiel der Fig. 5 nur der oberhalb des Stützelements 45 angeordnete Linearantrieb 44 für den Schlitten 9 erkennbar ist. Die Linearantriebe 42, 44 sind hier als Zahnriemenantriebe ausgeführt, wobei der Zahnriemen über ein Getriebe 46 und eine Zahnriemenschetbe 47 angetrieben wird. Da die Linearantriebe 42, 44 unbeweglich zu den Linearachsen 8, 12 angeordnet sind, ist ein aufwendiger Kabelschlepp entbehrlich. Vorzugsweise sind zwischen den Linearachsen 8, 12 mindestens zwei Stützelemente in unterschiedlicher Höhe vorgesehen, wobei in Fig. 5 nur ein solches Stützelement 45 erkennbar ist.

Der Träger 2 ist an seinem Basisschenkel 3 jeweils über ein Schwenkgelenk 17,19 an den Linearachsen 8, 12 schwenkbar angelenkt. Zu diesem Zweck weisen die Schlitten 9, 13 vorzugsweise ein Schwenklager als Teil des entsprechenden Schwenkgelenks 17, 19 auf. Zwischen dem Schlitten 13 der Antriebsachse 12 und dem Basisschenkel 3 des Trägers 2 ist ein Längenausgleichselementin Form eines Zwischenschlittens 24 vorgesehen, der an dem Schlitten 13 über das Schwenkgelenk 19 schwenkbar angelenkt ist und entlang dem Basisschenkel 3 des Trägers 2, bzw. allgemeiner parallel dazu, in Richtung 28 hin und her verschiebbar isL Der Basisschenkel 3 des Trägers 2 und der Zwischenschlitten 24 weisen jeweils ein Gegenlager für die entsprechenden Lager an den Schlitten 9, 13 zur Bildung der Schwenkgelenke 17, 19 auf. Der Zwischenschlitten 24 und der Schlitten 13 bilden einen in sich schwenkbaren Kreuzschlitten.

In einer anderen, in der Praxis bevorzugten Ausführungsform ist an dem Schlitten 13 eine Führungsschiene befestigt, die senkrecht zur Längsachse der Linearachsen 8, 12 orientiert sein kann. Ein Zwischenschlitten ist entlang dieser Führungsschiene verschiebbar angeordnet. Der Zwischenschlitten weist ein Schwenklager auf, das mit einem an dem Träger 2 angeordneten Gegenlager das Schwenklager 19 bildet.

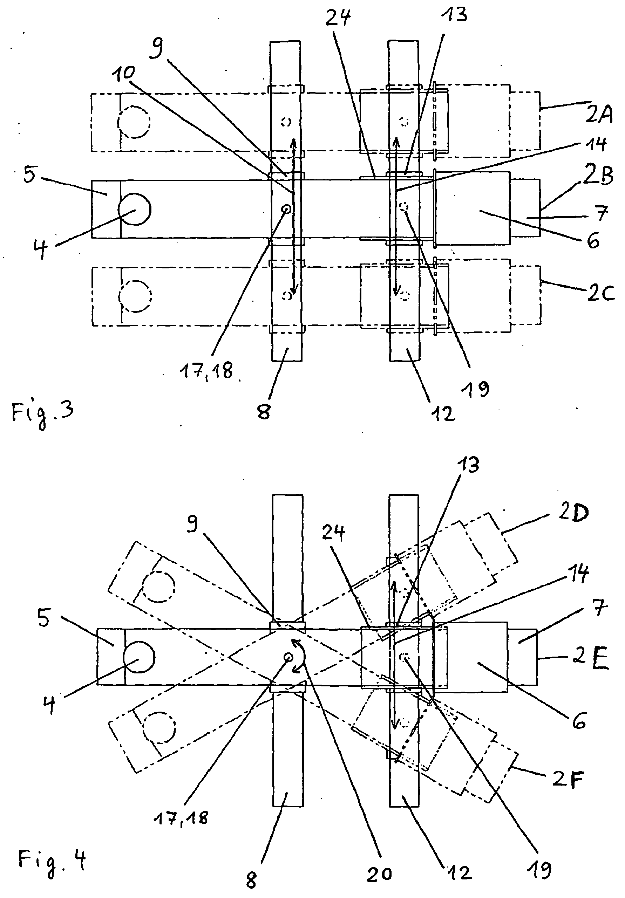

Bei der gleichzeitigen und gleichsinnigen Verstellung der Schlitten 9, 13 bzw. allgemeiner der Schwenkgelenke 17, 19 entlang der Linearachsen 8, 12 nach oben oder unten wird der Träger 2 linear nach oben (Position 2A in Fig. 3) bzw. nach unten versetzt (Position 2C in Fig. 3), wie dies in Fig. 3 beispielhaft für drei unterschiedliche parallelversetzte Positionen 2A, 2B, 2C des Trägers 2 gezeigt ist.

Bei Verschiebung des Schlittens 13 bzw. allgemeiner des Schwenkgelenks 19 entlang der entsprechenden Linearschse 12 in Richtung 14 und Festhalten des Schlittens 9 bzw. allgemeiner des Schwenkgelenks 17 an der entsprechenden Linearachse 8 schwenkt der Träger 2 um die Schwenkachse 18 in Richtung des Doppelpfeils 20, wie dies in Fig. 4 beispielhaft für drei unterschiedliche Schwenkpositionen 2D, 2E, 2F des Trägers 2 gezeigt ist. Beim Schwenken des Trägers 2 gleitet das Längenausgleichselement 24 entlang des Basisschenkels 3 des Trägers 2.

Es ist auch eine gleichzeitige lineare Verschiebung und eine Schwenkung des Trägers 2 möglich. Weiterhin kann eine Schwenkung auch durch gegenläufige Verschiebung der Schwenkgelenke 17, 19 oder gleichläufige Verschiebung mit unterschiedlichen Geschwindigkeiten vorgesehen sein. Dabei muß die Schwenkachse 18 nicht mit der Gelenkachse eines der Schwenkgelenke 17, 19 zusammenfallen, sondern kann beispielsweise zwischen diesen verlaufen.

Durch die beiden Linearachsen 8, 12 ergibt sich ein zweiachsiger Manipulator 40, mit dem eine Hubbewegung des Trägers 2 entlang einer Hubachse 10, 14 und eine Schwenkbewegung des Trägers 2 um eine Schwenkachse 18 ausgeführt werden kann.

Die schwerere Röntgenkomponente, hier der Detektor 6, ist in geringerem Abstand zu dem Schwenkgelenk 19 angeordnet im Vergleich zum Abstand zwischen Röntgenröhre 4 und dem anderen Schwenkgelenk 17. Anders ausgedrückt sind die Schwenkgelenke 17, 19 zwischen dem Träger 2 und den Linearachsen 8, 12 zu der schwereren Röntgenkomponente hin versetzt angeordnet. Dadurch wird das von derschwereren Röntgenkomponente auf das entsprechende Schwenkgelenk 19 ausgeübte Drehmoment reduziert. Um eine zweckmäßige Anordnung der Schwenkachse 18 im Prüfbereich zu erreichen, ist die leichtere Komponente vorzugsweise auf der Seite des Schwenklagers 18 und die schwerere Komponente auf der entgegengesetzten Seite des Trägers 2 angeordnet.

Die Anlenkungen des Trägers 2 an den Linearachsen 8, 12 können vorzugsweise so gewählt werden, daß die Last des Trägers 2 etwa gleichermaßen auf die beiden Linearantriebsachsen 8, 12 verteilt ist.

Zur Steuerung der Linearantriebe kann eine nicht gezeigte elektronische Steuervorrichtung verwendet werden, die mit der Auswerteeinrichtung zur Auswertung des detektierten Röntgensignals identisch sein kann. Dies ist jedoch nicht zwingend erforderlich. Es kann auch eine einfache elektrische Ansteuerung beispielsweise mittels eines Bedienhebels vorgesehen sein.

Wie aus Fig. 5 ersichtlich ist, weist der Halter 41 eine reduzierte Tiefe L auf, da auf den im Stand der Technik vorgesehenen überstehenden Schwenkantrieb verzichtet werden kann.

## Patentansprüche

1. Prüfapparat für zerstörungsfreie Materialprüfung, mit einem Manipulator (40), der zwei Linearachsen (8, 12) aufweist, einer Prüfvorrichtung bestehend aus einer Prüfquelle (4) und einem Detektor (6), und mit einem um eine Schwenkachse (18) schwenkbaren und in einer Längsrichtung (10, 14) des Manipulators (40) verfahrbaren, längenunveränderlichen Träger (2), an dem die Prüfquelle (4) und der Detektor (6) befestigt sind, wobei der Träger (2) an den Linearachsen (8, 12) in einem Abstand jeweils über ein Schwenkgelenk (17, 19) angelenkt und in der Längsrichtung (10, 14) unabhängig verfahrbar ist, und wobei zwischen dem Träger (2) und nur einer der Linearachsen (12) ein Längenausgleichselement (24) vorgesehen ist.

2. Prüfapparat nach Anspruch 1, **dadurch gekennzeichnet, dass** die Prüfquelle (4) und der Detektor (6) einander gegenüberliegend an dem Träger (2) befestigt sind.

3. Prüfapparat nach Anspruch 1 oder 2, **dadurch gekennzeichnet, dass** die Prüfvorrichtung (4, 6) eine Röntgenvorrichtung ist.

4. Prüfapparat nach einem der Ansprüche 1 bis 3, **dadurch gekennzeichnet, dass** zum Verfahren des Trägers (2) jeweils ein entlang der Linearachsen (8, 12) verfahrbares Führungselement (9, 13) vorgesehen ist.

5. Prüfapparat nach Anspruch 4, **dadurch gekennzeichnet, dass** die Führungselemente (9, 13) als Schlitten ausgebildet sind.

6. Prüfapparat nach einem der Ansprüche 1 bis 5, **dadurch gekennzeichnet, dass** der Träger (2) C-förmig ist.

7. Prüfapparat nach Anspruch 1, **dadurch gekennzeichnet, daß** das Längenausgleichselement (24) im wesentlichen von einem verschiebbaren Zwischenschlitten gebildet wird.

8. Prüfapparat nach einem der Ansprüche 1 bis 7, **dadurch gekennzeichnet, dass** eine Schwenkung des Trägers (2) durch Verfahren des Trägers (2) entlang einer Linearachse (12) und Festhalten des Trägers (2) an der anderen Linearachse (8) bewirkt wird.

9. Prüfapparat nach einem der Ansprüche 1 bis 8, **dadurch gekennzeichnet, dass** die Linearachsen (8, 12) im wesentlichen parallel zueinander ausgerichtet sind.

10. Prüfapparat nach Anspruch 1, **dadurch gekennzeichnet, dass** die Anlenkung des Trägers (2) an den Linearachsen (8, 12) zu einer schwereren Komponente der Prüfvorrichtung (4, 6) versetzt ist.

## Claims

1. Test apparatus for non-destructive material testing, with a manipulator (40) having two linear axes (8, 12), a test device consisting of a test source (4) and a detector (6), and with a carrier (2) of unchangeable length, which is rotatable around a swiveling axis (18) and moveable in a longitudinal direction (10, 14) of the manipulator (40), on which the test source (4) and the detector (6) are fastened, wherein the carrier (2) is hinged on the linear axes (8, 12) with a distance, in each case via a swiveling joint (17, 19), and is moveable independently in the longitudinal direction (10, 14), and wherein a length compensation element (24) is provided between the carrier (2) and only one of the linear axes (12).

2. Test device according to claim 1, **characterized in that** the test source (4) and the detector (6) are mounted opposite to each other on the carrier (2).

3. Test device according to claim 1 or 2, **characterized in that** the test device (4, 6) is an X-ray device.

4. Test device according to one of the claims 1 to 3, **characterized in that** a guide element (9, 13) moveable along each of the linear axes (8, 12) is provided for moving the carrier (2).

5. Test device according to claim 4, **characterized in that** the guide elements (9, 13) are configured as carriages.

6. Test device according to one of the claims 1 to 5, **characterized in that** the carrier (2) is C-shaped.

7. Test device according to claim 1, **characterized in that** the length compensation element (24) is substantially formed by a displaceable intermediate carriage.

8. Test device according to one of the claims 1 to 7, **characterized in that** swiveling of the carrier (2) is caused by moving the carrier (2) along a linear axis (12) und holding the carrier (2) on the other linear axis (8).

9. Test device according to one of the claims 1 to 8, **characterized in that** the linear axes (8, 12) are substantially aligned parallel to each other.

10. Test device according to claim 1, **characterized in that** the hinging of the carrier (2) on the linear axes (8, 12) is offset relative to a heavier component of the test device (4, 6).

## Revendications

1. Appareil de contrôle destiné au contrôle non destructif de matériaux, comprenant un manipulateur (40) qui présente deux axes linéaires (8, 12), un dispositif de contrôle se composant d'une source de contrôle (4) et d'un détecteur (6), et un support (2) à longueur invariable apte à pivoter autour d'un axe de pivotement (18) et déplaçable dans un sens longitudinal (10, 14) du manipulateur (40), support sur lequel sont fixés la source de contrôle (4) et le détecteur (6), dans lequel ledit support (2) est articulé à une distance sur les axes linéaires (8, 12) respectivement par une articulation de pivotement (17, 19) et est déplaçable de manière indépendante dans le sens longitudinal (10, 14), et dans lequel un élément de compensation de longueur (24) est prévu entre ledit support (2) et l'un seulement des axes linéaires (12).

2. Appareil de contrôle selon la revendication 1, **caractérisé par le fait que** ladite source de contrôle (4) et le détecteur (6) sont fixés sur le support (2) en étant en regard l'un de l'autre.

3. Appareil de contrôle selon la revendication 1 ou 2, **caractérisé par le fait que** le dispositif de contrôle (4, 6) est un dispositif à rayons X.

4. Appareil de contrôle selon l'une quelconque des revendications 1 à 3, **caractérisé par le fait que** respectivement un élément de guidage (9, 13) déplaçable le long des axes linéaires (8, 12) est prévu pour déplacer le support (2).

5. Appareil de contrôle selon la revendication 4, **caractérisé par le fait que** les éléments de guidage (9, 13) sont réalisés en tant que chariots.

6. Appareil de contrôle selon l'une quelconque des revendications 1 à 5, **caractérisé par le fait que** le support (2) est en forme de C.

7. Appareil de contrôle selon la revendication 1, **caractérisé par le fait que** ledit élément de compensation de longueur (24) est formé pour l'essentiel par un chariot intermédiaire déplaçable.

8. Appareil de contrôle selon l'une quelconque des revendications 1 à 7, **caractérisé par le fait qu'**un pivotement du support (2) est provoqué en déplaçant le support (2) le long d'un axe linéaire (12) et en retenant le support (2) sur l'autre axe linéaire (8).

9. Appareil de contrôle selon l'une quelconque des revendications 1 à 8, **caractérisé par le fait que** les axes linéaires (8, 12) sont orientés de manière essentiellement parallèle l'un à l'autre.

10. Appareil de contrôle selon la revendication 1, **caractérisé par le fait que** l'articulation du support (2) sur les axes linéaires (8, 12) est décalée vers un composant plus lourd du dispositif de contrôle (4,6).
